# EUROPEAN PATENT APPLICATION

(11) **EP 3 572 199 A1**
(43) Date of publication of application: **27.11.2019**
(21) Application number: 17892791.9
(22) Date of filing: 15.11.2017
(51) Int. Cl.: B29C 33/02, B29C 35/02

(54) **DEVICE FOR VULCANIZING RUBBER ARTICLE**

(30) Priority: 17.01.2017 JP 2017005836
(71) Applicant: Bridgestone Corporation, Tokyo 104-8340 (JP)
(72) Inventor: ISHIHARA, Yasuyuki, Tokyo 104-8340 (JP)
(74) Representative: Oxley, Robin John George
(86) International application number: PCT/JP2017/041076
(87) International publication number: WO 2018/135116

(57) **Abstract**

The temperature can be regulated depending on the part of the rubber article heated by the mold and therefore the temperature difference in the rubber article is reduced.

The vulcanizing apparatus for rubber article comprises a mold (3) to mold an unvulcanized rubber article, a holding body (4) to hold the mold (3), a heating means (25) to heat the holding body and an inhibition part (5). The vulcanizing apparatus for rubber article vulcanizes the rubber article by heat transferred from the holding body (4) to the mold (3) . The inhibition part (5) is formed in a part between the mold (3) and the holding body (4) so as to inhibit transfer of the heat from the holding body (4) to the mold (3).

## Description

### BACKGROUND OF THE INVENTION

### Field of the Invention

The present invention relates to a vulcanizing apparatus comprising a mold for molding an un-vulcanized rubber article.

### Related Background of the Invention

Upon manufacturing a tire which is a rubber article, the tire is heated to be vulcanized while an unvulcanized tire is molded by a mold of a vulcanizing apparatus . Generally, the mold is heated by using one heat source so as to transfer a heat to the tire. However, due to differences in properties (thickness, distance from the heat source, an amount of heat discharge, presence or absence of tread) and so forth among parts of the tire, temperature differences can occur among parts of the tire. If temperature differences in the tire become large during vulcanizing, differences in physical property values among the parts of rubber may occur, and thus performance of the tire could be affected.

As a method to cope with such problem, a tire vulcanization method for vulcanizing the tire by changing the temperature of the heat source has been known (cf. patent document 1).

However, in the conventional tire vulcanization method described in the patent document 1, since regulation of temperature depending on each of parts of the tire is impossible, it is difficult to reduce differences in temperature in the tire.

### Prior Art

### Patent Literature

Patent Literature 1: Japanese Patent Laid-Open No. 2007-230102

### SUMMARY OF THE INVENTION

### Problems to be Solved by Invention

The present invention is made in view of the above-described conventional problem and an object thereof is to reduce the temperature differences in the rubber article through regulation of the temperature depending on each of parts of the rubber article heated by the mold.

### Means for solving Problems

The present invention is a vulcanizing apparatus for rubber article comprising; a mold to mold an unvulcanized rubber article, a holding body to hold the mold and a heating means to heat the holding body, the rubber article being vulcanized by heat transferred from the holding body to the mold. The vulcanizing apparatus for rubber article comprises an inhibition part which is formed in a part between the mold and the holding body so as to inhibit transfer of the heat from the holding body to the mold.

Moreover, the present invention is a vulcanizing apparatus for rubber article comprising; a mold to mold an unvulcanized rubber article, a holding body to hold the mold and a heating means to heat the holding body, the rubber article being vulcanized by heat transferred from the holding body to the mold. The mold has a molding part to mold the rubber article while being in contact with the rubber article and a part of different characteristic which is formed in a part of the molding part and has a thermal conductive property that is different from thermal conductive properties of other parts of the mold.

### EFFECTS OF THE INVENTION

According to the present invention, the temperature can be regulated depending on each of parts of the rubber article heated by the mold and therefore the temperature differences in the rubber article can be reduced.

### BRIEF DESCRIPTION OF THE DRAWINGS

Fig. 1 is a sectional view illustrating a tire vulcanizing apparatus of the first embodiment;
Fig. 2 is a sectional view illustrating the tire vulcanizing apparatus of the first embodiment;
Fig. 3 is a sectional view illustrating a part of the tire vulcanizing apparatus of the first embodiment;
Fig. 4 is a sectional view illustrating a tire vulcanizing apparatus of the second embodiment;
Fig. 5 is a sectional view illustrating a tire vulcanizing apparatus of the third embodiment;
Fig. 6 is a sectional view illustrating a tire vulcanizing apparatus of the fourth embodiment;
Fig. 7 is a sectional view illustrating a tire vulcanizing apparatus of the fifth embodiment;
Figs. 8A to 8D are schematic views to explain a part of different characteristic of the tire vulcanizing apparatus of the fifth embodiment;
Fig. 9 is a sectional view illustrating temperature measurement points of the tire;
Fig. 10 is a table showing materials which are used in the first to fourth tests and qualities thereof;
Fig. 11 is a table showing the result of the first test;
Fig. 12 is a table showing the result of the second test;
Fig. 13 is a table showing the result of the third test;
Fig. 14 is a table showing the result of the fourth test;
Fig. 15 is a table showing materials which are used in the fifth to seventh tests and qualities thereof;
Fig. 16 is a table showing the result of the fifth test;
Fig. 17 is a table showing the result of the sixth test;
Fig. 18 is a table showing the result of the seventh test.

### DESCRIPTION OF THE PREFERRED EMBODIMENTS

An embodiment of a vulcanizing apparatus for rubber article of the present invention will be described with referring to the attached drawings.

The vulcanizing apparatus for rubber article of the present embodiment vulcanizes an unvulcanized rubber article while molding it and thereby produces a vulcanized rubber article. In the followings, taking the rubber article as an annular tire for example, a plurality of embodiments will be described. Therefore, the vulcanizing apparatus for rubber article is a tire vulcanizing apparatus to vulcanize an unvulcanized tire.

### (The first embodiment)

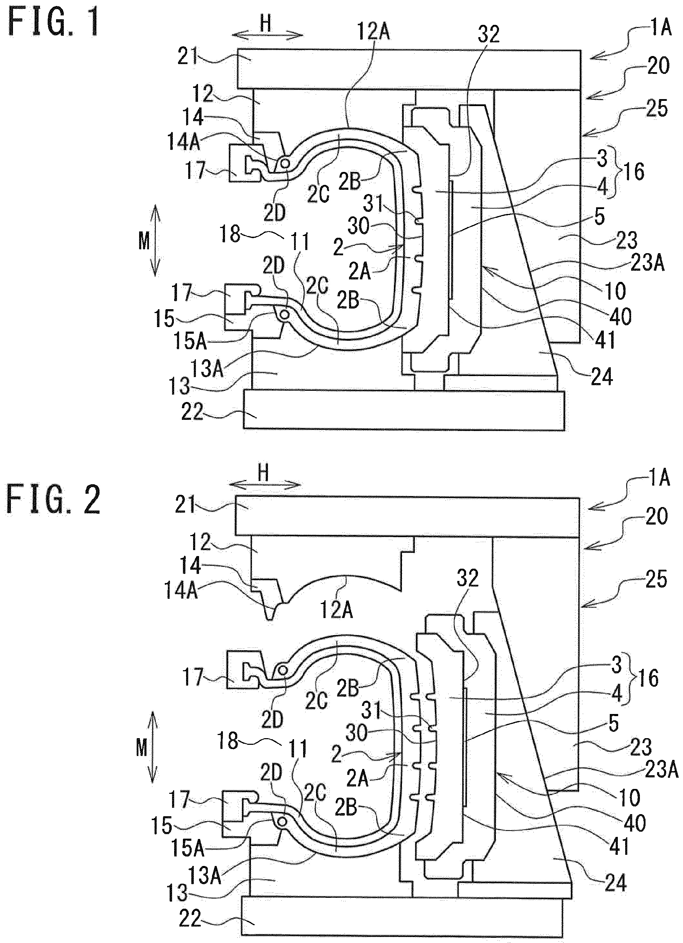

Figs. 1 and 2 are sectional views illustrating a tire vulcanizing apparatus 1A of the first embodiment and show the tire vulcanizing apparatus 1A which is cut in a width direction of a tire 2 (tire width direction M) and the tire 2. Fig. 1 illustrates a part of the tire vulcanizing apparatus 1A in closed state and Fig. 2 illustrates the part of the tire vulcanizing apparatus 1A in opened state.

As illustrated, the tire 2 has a tread part 2A, a pair of shoulder parts 2B located in both outsides of the tread part 2A in the tire width direction M, a pair of side parts 2C formed towards inside of the tire 2 in a radial direction (tire radial direction H) from the shoulder parts 2B and a pair of bead parts 2D located inside of the side parts 2C in the tire radial direction H. The tread part 2A is a part including the outer periphery of the tire 2 and is annularly formed along the circumferential direction of the tire 2 (tire circumferential direction).

The tire vulcanizing apparatus 1A comprises an annular mold 10 housing the tire 2, a bladder 11 which is expandable, and an opening and closing mechanism 20 which opens and closes the mold 10. The tire vulcanizing apparatus 1A heats the tire 2 in the mold 10 to vulcanize it and molds the unvulcanized tire 2 (green tire) by the mold 10.

Here, for indicating directions of the tire vulcanizing apparatus 1A and the mold 10, directions of the tire 2 molded by the mold 10 are referred to. The directions of the tire 2 are the tire width direction M, the tire radial direction H and the tire circumferential direction. Based on each of the directions of the tire 2, the directions of the tire vulcanizing apparatus 1A and the mold 10 are referred to. Moreover, the tire width direction M is aligned with the width direction of the mold 10 (mold width direction), and the tire radial direction H is aligned with the radial direction of the mold 10 (mold radial direction) . The tire circumferential direction is aligned with the circumferential direction of the mold 10 (mold circumferential direction).

The mold 10 is an outer die to mold the outer surface of the tire 2, and comprises a pair of annular side molds 12, 13 (upper side mold 12, lower side mold 13), a pair of annular bead molds 14, 15 (upper bead mold 14, lower bead mold 15), and a plurality of split molds 16. The side molds 12, 13 have molding parts (side molding parts) 12A, 13A to come in contact with the side parts 2C and mold the side parts 2C by the molding parts 12A, 13A, respectively. The bead molds 14, 15 have molding parts 14A, 15A (bead molding parts) to come in contact with the bead parts 2D of the tire 2 and mold the bead parts 2D by the molding parts 14A, 15A, respectively.

The plurality of split molds 16 are a plurality of segment molds divided in the tire circumferential direction and mold the tread part 2A of the tire 2 and the pair of shoulder parts 2B. The plurality of split molds 16 are located sequentially along the tire circumferential direction and put together into an annular form between the pair of side molds 12, 13. The plurality of split molds 16 surround the tire 2 while being put together into the annular form. Moreover, the plurality of split molds 16 have molding parts 30 (tread and shoulder molding parts) to come in contact with the tread part 2A and the shoulder parts 2B and mold the tread part 2A and the shoulder parts 2B by the molding parts 30. By the plurality of split molds 16, a tread pattern is molded on the tread part 2A of the tire 2.

Tire vulcanizing apparatus 1A comprises a pair of clamp members 17 holding the bladder 11 and a supply device (not shown) to supply gas (e.g. steam) into the bladder 11. The pair of clamp members 17 hold both ends of the bladder 11 located inside in the tire radial direction H. The bladder 11 is placed in the tire 2 and is expanded by gas so as to come in contact with the inner surface of the tire 2. Upon vulcanizing the tire 2, the tire vulcanizing apparatus 1A pressurizes the tire 2 by the expanded bladder 11, so that the tire 2 is pushed against the molding parts 12A - 15A, 30 of the mold 10. Moreover, by a heat of the gas, the tire 2 is heated to a vulcanization temperature where it is vulcanized. After vulcanization of the tire 2, gas is exhausted from the bladder 11 and then the bladder 11 contracts.

The opening and closing mechanism 20 has an upper plate 21 located on the upper side of the mold 10, a lower plate 22 located on the lower side of the mold 10, a cylindrical outer ring 23 secured to the upper plate 21 and a plurality of movable members 24 located between the outer ring 23 and the plurality of sprit molds 16. By a moving device (not shown), the upper plate 21 is moved in the vertical direction (tire width direction M) above the lower plate 22 and thus the upper plate 21 and the lower plate 22 come close to or separate from each other. The mold 10 is located between the upper plate 21 and the lower plate 22 and is connected to the upper plate 21 and the lower plate 22. Specifically, the upper side mold 12 is attached to the upper plate 21 and is moved integrally with the upper plate 21. The lower side mold 13 is attached to the lower plate 22.

The outer ring 23 surrounds the mold 10 and the plurality of movable members 24 and is moved integrally with the upper plate 21. Each of the plurality of movable members 24 is movably connected to the inner periphery of the outer ring 23 (guide part 23A) . With movement of the outer ring 23, movable members 24 are guided by the guide part 23A of the outer ring 23 and thus are moved in the tire radial direction H. The plurality of split molds 16 are attached to the movable members 24, respectively and are moved integrally with the movable members 24 in the tire radial direction H. At the time of moving, the plurality of movable members 24 slide on the upper surface of the lower plate 22, and thus, the plurality of movable members 24 and the split molds 16 are moved radially. In this way, the plurality of movable members 24 and the split molds 16 come close to or separate from one another in the tire circumferential direction.

The opening and closing mechanism 20 makes the upper side mold 12 and the lower side mold 13 come close to or separate from each other by movement of the upper plate 21. At the same time, the outer ring 23 is integrally moved to make the plurality of split molds 16 come close to or separate from one another. In this way, the opening and closing mechanism 20 opens and closes the mold 10. When the mold 10 is opened, the upper side mold 12 and the lower side mold 13 are separated from each other and the plurality of split molds 16 are separated from one another. When the tire mold 10 is closed, the upper side mold 12 and the lower side mold 13 come close to each other and the plurality of split molds 16 come close to and contact with one another. In this state, the plurality of split molds 16 are put together into an annular form. Moreover, the plurality of split molds 16 are combined with the upper side mold 12 and the lower side mold 13 while being in contact with the upper side mold 12 and the lower side mold 13.

The upper plate 21, the lower plate 22 and the outer ring 23 are heating members (upper heating member, lower heating member, outer periphery heating member) for heating the mold 10. The tire vulcanizing apparatus 1A heats the upper plate 21, the lower plate 22 and the outer ring 23 by a heating device (not shown) and thus the mold 10 is heated by the upper plate 21, the lower plate 22 and the outer ring 23. The tire 2 is heated to the vulcanization temperature by the mold 10 and thus vulcanized.

Upon vulcanizing the tire 2, the mold 10 is opened (cf. Fig. 2) and the unvulcanized tire 2 is located in the mold 10. Moreover, the bladder 11 is placed in the tire 2. Successively, the mold 10 is closed (cf. Fig. 1) to house the tire 2 in an internal space 18 of the mold 10. In this state, the tire 2 is pressurized by expanding the bladder 11. The tire 2 is pressed against the mold 10, so that the outer surface of the tire 2 is molded by the mold 10. At the same time, the tire 2 is heated and thus the tire 2 is vulcanized. After the vulcanization of the tire 2, the mold 10 is opened and the tire 2 after vulcanization is taken out of the mold 10.

Each of the plurality of split molds 16 has a mold 3 for molding the unvulcanized tire 2 and a holding body 4 for holding the mold 3. The mold 3 is a design surface member having a molding part 30, and formed into an arc form as viewed from the outside thereof in the tire width direction M. Upon vulcanizing the tire 2, the molds 3 of the plurality of split molds 16 are located sequentially along the tire circumferential direction and are put together into an annular form and surround the tire 2. Here, the molding part 30 is an inner periphery (contact part) of the mold 3, which molds the tire 2 while being in contact with the tire 2 (here, the tread part 2A and the pair of shoulder parts 2B) .

The molding part 30 of the mold 3 has a plurality of convex parts 31 to form concave parts in the tire 2. The molding part 30 forms concave parts (e.g., grooves, dents) on the tread part 2A of the tire 2 by the convex parts 31. Moreover, the mold 3 has an attaching part 32 (outer periphery) attached to the holding body 4. The holding body 4 is a block-like base (base mold) and comprises a connecting part 40 which is connected to the movable member 24 and a holding part 41 which holds the mold 3. The holding body 4 is located outside in the tire radial direction H with respect to the mold 3 and the movable member 24 is located outside in the tire radial direction H with respect to the holding body 4.

The movable member 24 is connected to the holding body 4 while being in contact with the connecting part 40 of the holding body 4. The mold 3 is held by the holding body 4 while being in contact with the holding part 41 of the holding body 4. On this occasion, the mold 3 is attached to the holding body 4 while the attaching part 32 of the mold 3 is in contact with the holding part 41. The holding body 4 holds the mold 3 in the holding part 41 while being in contact with the mold 3 through the holding part 41. The mold 3 is attached to the inside of the holding body 4 in the tire radial direction H and the holding body 4 is attached to the inside of the movable member 24 in the tire radial direction H.

The tire vulcanizing apparatus 1A heats the outer ring 23 by the heating device and thus heats the movable member 24 by the outer ring 23. The holding body 4 and the split molds 16 are heated by the movable member 24. Therefore, the heating device, outer ring 23 and the movable member 24 are a heating means 25 of the tire vulcanizing apparatus 1A for heating the holding body 4 and the split molds 16. The tire vulcanizing apparatus 1A heats the tire 2 by heat transferred to the mold 3 from the holding body 4 and vulcanizes it. The mold 3 is heated by the holding body 4 and thus heats the tire 2 which is in contact with the molding part 30.

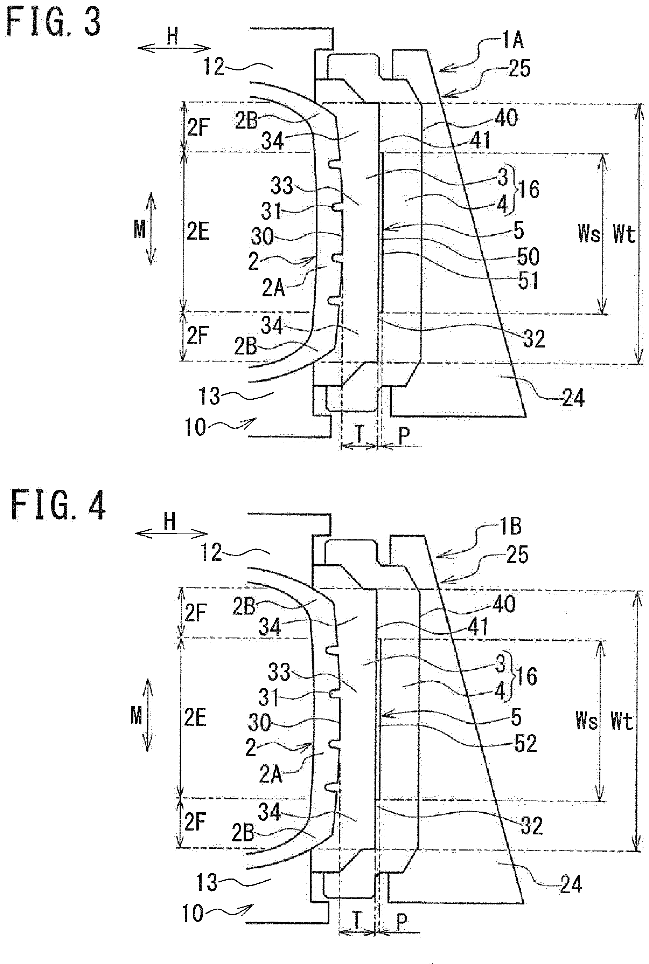

Fig. 3 is a sectional view illustrating a part of the tire vulcanizing apparatus of the first embodiment which is an enlarged part of Fig. 1.

As illustrated, the tire vulcanizing apparatus 1A comprises the mold 3, the holding body 4, the heating means 25 and an inhibition part 5. The inhibition part 5 is formed in a part between the mold 3 and the holding body 4 so as to inhibit the heat transfer from the holding body 4 to the mold 3. Here, the inhibition part 5 is made of a heat shielding material 50 located between the mold 3 and the holding body 4. The heat shielding material 50 is a low thermal conductive material having a thermal conductivity that is lower than the thermal conductivity of the mold 3 and is housed in a housing part 51. For example, the mold 3 and the holding body 4 are made of metal (steel, aluminum alloy etc.), and are formed by various forming processes (casting, machine processing, sintering, laminate shaping etc.). Moreover, the heat shielding material 50 is made of a heat insulating material (rubber, glass wool), and is formed into a sheet form corresponding to the shape of the housing part 51.

The housing part 51 is composed of a concave part formed in the holding body 4 and is recessed in the holding body 4 with respect to the holding part 41 of the holding body 4. Moreover, the housing part 51 is formed in a part between the mold 3 and the holding body 4 and extends along the tire circumferential direction. The opening of the housing part 51 on the side of the mold 3 is closed with the mold 3. The heat shielding material 50 is filled in the housing part 51 and thus comes in contact with the mold 3 and the holding body 4. Between the mold 3 and the holding body 4, the heat shielding material 50 and the inhibition part 5 are located along the tire circumferential direction to shield a part of heat (heat energy) directing to the mold 3 from the holding body 4.

In some part (the part where the inhibition part 5 is provided) between the mold 3 and the holding body 4, the mold 3 and the holding body 4 are not in contact with each other owing to the inhibition part 5, so that the heat is indirectly transferred from the holding body 4 to the mold 3. In contrast, in the other part (the part where the inhibition part 5 is not provided) between the mold 3 and the holding body 4, the mold 3 and the holding body 4 are in contact with each other, so that the heat is directly transferred from the holding body 4 to the mold 3. Moreover, the holding part 41 of the holding body 4 and the attaching part 32 of the mold 3 are in close contact with each other, so that the heat is transferred from the holding part 41 to the attaching part 32. Therefore, in the part where the inhibition part 5 is provided, the heat transfer from the holding body 4 to the mold 3 is inhibited in comparison with the part where the inhibition part 5 is not provided. In the state, the heat is transferred to the mold 3 from the holding body 4 through the inhibition part 5.

A position where the inhibition part 5 (the heat shielding material 50) is to be provided may be set based on the temperature of each of parts of the tire 2 during vulcanizing. For example, by calculation using the calculating formula of temperature, simulation of the temperature or actual measurement of the temperature, the temperature of each of parts of the tire 2 is obtained and a part where the temperature is to be regulated (temperature regulating part) in the tire 2 is decided. For example, the temperature regulating part of the tire 2 is the part where a temperature rise should be delayed or the part where the temperature should be reduced. In this case, a part where the temperature rise is relatively quick in the tire 2 or a part where the temperature is relatively high in the tire 2 is set as a temperature regulating part of the tire 2.

The inhibition part 5 is formed between the regulating part of the mold 3 and the holding body 4, so that it covers a part (regulating part of the mold 3) for molding the temperature regulating part of the tire 2 in the mold 3. By the inhibition part 5, heat transfer to the regulating part of the mold 3 is inhibited so as to regulate the temperature of the temperature regulating part of tire 2. In the temperature regulating part of the tire 2, heating may be more suppressed than a case where there is no inhibition part 5, so that the temperature rise may be delayed or the temperature may be lowered. As a result, the temperature difference in the tire 2 may be reduced.

Here, the temperature regulating part of tire 2 is a central area 2E of the tread part 2A. The central area 2E of the tread part 2A is a central part in the tire width direction M of the tread part 2A including a center position in the tire width direction M of the tread part 2A, and is located between a pair of outside areas 2F of the tire 2.
The outside area 2F of the tire 2 is composed of an outside area in the tire width direction M of the tread part 2A including an outside end in the tire width direction M of the tread part 2A and the shoulder part 2B. In the outside area 2F of the tire 2, the temperature rise is tending to be delayed for such reasons that, in comparison with the central area 2E of the tread part 2A, a distance from the heating means 25 is longer, an amount of rubber is lager or heat loss due to heat dissipation is larger. As a result, the temperature rising speed in the central area 2E of the tread part 2A is faster than that in the outside area 2F of the tire 2 and thus the temperature becomes higher.

The regulating part of the mold 3 is a central area 33 of the mold 3 for molding the central area 2E of the tread part 2A. The central area 33 of the mold 3 is a central area in the tire width direction M of the mold 3 including a center position in the tire width direction M of the mold 3, and is located between a pair of outside areas 34 of the mold 3. The outside area 34 of the mold 3 is an outside part in tire width direction M of the mold 3 including an outside end in the tire width direction M of the mold 3, and molds the outside area 2F of the tire 2. The central area 2E of the tread part 2A is heated by the central area 33 of the mold 3, and the outside area 2F of the tire 2 is heated by the outside area 34 of the mold 3.

The inhibition part 5 is formed between the central area 33 of the mold 3 and the holding body 4 and inhibits transfer of heat from the holding body 4 to the central area 33 of the mold 3. The central area 33 of the mold 3 does not contact with the holding body 4, and heat is transferred to the central area 33 of the mold 3 through the inhibition part 5. In contrast, the outside area 34 of the mold 3 contacts with the holding body 4, and heat is directly transferred to the outside area 34 of the mold 3 from the holding body 4. As a result, heating of the central area 33 of the mold 3 is suppressed in comparison with a case without inhibition part 5, so that the temperature of the central area 2E (central temperature) of the tread part 2A is lowered. In this way, due to the inhibition part 5, the central temperature of the tread part 2A is regulated. Moreover, the central temperature of the tread part 2A comes close to the temperature of the outside area 2F (outside temperature) of the tire 2, so that a difference between the central temperature and the outside temperature is reduced.

As described above, the tire vulcanizing apparatus 1A can easily regulate the temperature depending on parts of the tire 2 heated by mold 3 and can reduce the temperature difference in the tire 2. As a result, the tire 2 can be vulcanized without spoiling performance of rubber in each of parts of the tire 2. Moreover, the difference of the vulcanized degree in the tire 2 and the difference of the physical property value of rubber in the tire 2 can be reduced. In particular, in the central area 2E of the tread part 2A, the temperature rise is suppressed in comparison with the case without the inhibition part 5, so that the temperature can be lowered. Moreover, the outside area 2F of the tire 2 can be vulcanized at a predetermined vulcanization degree while preventing an over-vulcanization of the central area 2E of the tread part 2A.

The inhibition part 5 can be easily provided in the existing split mold 16. When the inhibition part 5 is the heat shielding material 50, heat transfer from the holding body 4 to the mold 3 can be more surely inhibited by the inhibition part 5. By changing the heat shielding material 50, the heat transfer from the holding body 4 to the mold 3 can also be regulated. Note that the inhibition part 5 may be any part capable of inhibiting heat transfer other than the heat shielding material 50.

Then, the tire vulcanizing apparatuses of the other embodiments will be described. The tire vulcanizing apparatuses of the other embodiments are basically similar in construction to the tire vulcanizing apparatus 1A of the first embodiment and exhibit a similar effect. Therefore, in the followings, matters different from the matters which have been already described will be described and description of the same matters as the matters which have been already described will be omitted. Moreover, with respect to the tire vulcanizing apparatuses of the other embodiments, the same technical term and designation as for the constitution of the tire vulcanizing apparatus 1A are used for the constitution corresponding to the constitution of the tire vulcanizing apparatus 1A of the first embodiment.

### (The second embodiment)

Fig. 4 is a sectional view illustrating a tire vulcanizing apparatus 1B of the second embodiment and shows a part of the tire vulcanizing apparatus 1B like Fig. 3.

As illustrated, the inhibition part 5 of the tire vulcanizing apparatus 1B is a hollow part 52 which is formed between the mold 3 and the holding body 4. The hollow part 52 is composed of a concave part formed in the holding body 4 and is recessed in the holding body 4 with respect to the holding part 41 of the holding body 4. The hollow part 52 is formed in a part between the holding body 4 and the mold 3 and extends along the tire circumferential direction. The opening of the hollow part 52 on the side of the mold 3 is closed with the mold 3. Due to the hollow part 52, the heat transfer from the holding body 4 to the mold 3 can be more easily inhibited.

### (The third embodiment)

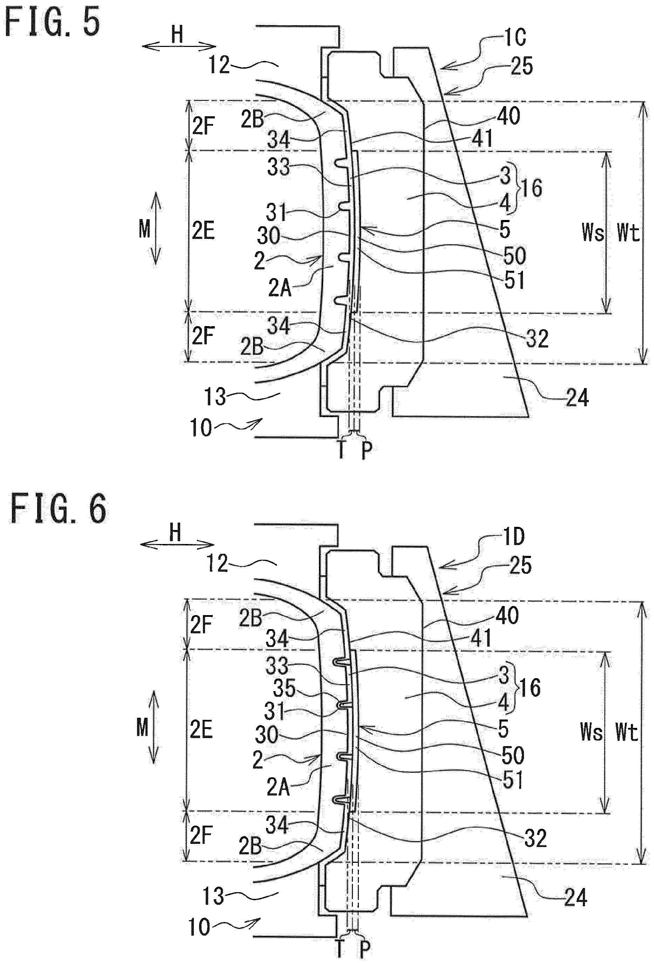

Fig. 5 is a sectional view illustrating a tire vulcanizing apparatus 1C of the third embodiment and shows a part of the tire vulcanizing apparatus 1C like Fig. 3.

As illustrated, the mold 3 of the tire vulcanizing apparatus 1C is thinner than the mold 3 of the tire vulcanizing apparatus 1A of the first embodiment. The mold 3 is a plate-like surface layer part of the split mold 16 and is formed thinner than the holding body 4. In this way, a heat capacity of the mold 3 becomes smaller and an influence of the inhibition part 5 on the thermal conductivity to the tire 2 may be increased. As a result, an effect to suppress the heating of the tire 2 by the inhibition part 5 may be increased.

### (The fourth embodiment)

Fig. 6 is a sectional view illustrating a tire vulcanizing apparatus 1D of the fourth embodiment and shows a part of the tire vulcanizing apparatus 1D like Fig. 5.

As illustrated, the mold 3 of the tire vulcanizing apparatus 1D is formed thinner than the holding body 4 like the mold 3 of the tire vulcanizing apparatus 1C of the third embodiment. Moreover, the mold 3 has cavities 35 formed between the inhibition part 5 and the molding part 30. A cavity 35 is formed in a part except the molding part 30 in the mold 3 between the inhibition part 5 and the molding part 30. For example, the cavity 35 is formed in the inside of the mold 3. Or the cavity 35 is a concave part which is recessed in the mold 3 with respect to the attaching part 32 of the mold 3 and is formed in a concave form opened to the side of the inhibition part 5.

Here, a plurality of cavities 35 are formed in the central area 33 of the mold 3. Moreover, the cavity 35 is the concave part opened to the side of the inhibition part 5 and is formed in the convex part 31 of the molding part 30. The plurality of convex parts 31 are formed between the inhibition part 5 and the tire 2, and the cavity 35 is formed in each of the plurality of convex parts 31. The cavity 35 is formed in the convex part 31 so that the convex part 31 is formed into a hollow form by the cavity 35. The heat shielding material 50 of the inhibition part 5 is located to cover the cavities 35 of the plurality of convex parts 31 so as to close the openings on the side of the inhibition part 5 of the cavities 35.

Between the inhibition part 5 and the tire 2, the mold 3 is made thinner by the cavity 35, so that the heat capacity of the mold 3 becomes small. As a result, in the part where the inhibition part 5 is provided, heating of the tire 2 with the mold 3 and temperature rise of the tire 2 are suppressed, so that the temperature of the temperature regulating part of the tire 2 can be more surely regulated. Heat capacity of the convex part 31 is lowered by forming the cavities 35 in the convex parts 31 of the molding part 30, so that the temperature rise of the tire 2 around the convex parts 31 can be delayed.

### (The fifth embodiment)

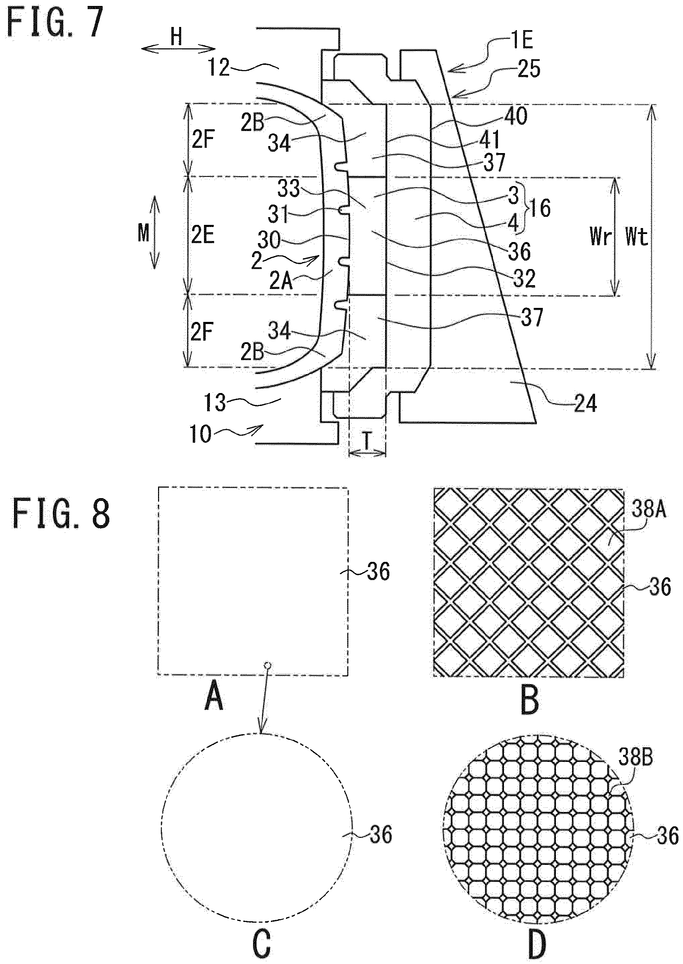

Fig. 7 is a sectional view illustrating a tire vulcanizing apparatus 1E of the fifth embodiment and shows a part of the tire vulcanizing apparatus 1E like Fig. 3.

As illustrated, the tire vulcanizing apparatus 1E does not include the inhibition part 5. Therefore, the mold 3 and the holding body 4 come in contact with each other as a whole between the mold 3 and the holding body 4. Moreover, the mold 3 has a part of different characteristic 36 formed in a part of the molding part 30. The part of different characteristic 36 is made of different kind of materials from that of the other part (part except the part of different characteristic 36) of the mold 3. The other part of the mold 3 is a main part 37 of the mold 3 except the part of different characteristic 36. The thermal conductive property of the part of different characteristic 36 is different from the thermal conductive property of the main part 37 of the mold 3. The thermal conductive property is, for example, thermal conductivity, specific heat or density.

A part on the side of the tire 2 of the part of different characteristic 36 is a part of the molding part 30, and a part on the side of the holding body 4 of the part of different characteristic 36 is a part of the attaching part 32. The part of different characteristic 36 is provided from the molding part 30 to the attaching part 32 of the mold 3 and is in contact with the tire 2 and the holding body 4. The mold 3 is made by fixing the part of different characteristic 36 to the main part 37 of the mold 3. Here, the central area 33 of the mold 3 is part of different characteristic 36, and the outside area 34 of the mold 3 is the main part 37 of the mold 3. The part of different characteristic 36 extends along the tire circumferential direction between the pair of outside areas 34.

In the part of different characteristic 36, conduction of heat (heat energy) toward the tire 2 is inhibited, so that conduction speed of heat reduced. As a result, heating of the tire 2 is suppressed, and temperature rise of the tire 2 is delayed. Moreover, heat losses occur between the part of different characteristic 36 and the main part 37, so that heating of the tire 2 is suppressed. Due to the part of different characteristic 36, an effect like the effect of the inhibition part 5 of the tire vulcanizing apparatus 1A of the first embodiment is obtained, and the temperature of a part of the tire 2 heated by the part of different characteristic 36 is regulated.

Figs. 8A to 8D are schematic views to explain the part of different characteristic 36 of the tire vulcanizing apparatus 1E of the fifth embodiment. Figs. 8A, 8C show a tissue of the part of different characteristic 36 without air gaps 38A, 38B, and Figs. 8B, 8D show the tissue of the part of different characteristic 36 with the air gaps 38A, 38B. Moreover, Fig. 8B is a view indicating an example in which the air gaps 38A are formed in the part of different characteristic 36 as shown in Fig. 8A. Fig. 8C is a view enlarging a part of Fig. 8A, and Fig. 8D is a view indicating an example in which the air gaps 38B are formed in the part of different characteristic 36 as shown in Fig. 8C.

As illustrated, when the air gaps 38A, 38B are not formed in the part of different characteristic 36 (cf. Figs. 8A, 8C), the part of different characteristic 36 and the main part 37 of the mold 3 are made of materials different from each other (e.g., the metals different from each other). In this way, a thermo-physical property values (e.g., thermal conductivity, specific heat) of the part of different characteristic 36 are made to be different from the thermo-physical property values of the main part 37, so that a thermal conductive property of the part of different characteristic 36 is different from the thermal conductive property of the main part 37.

In contrast, the part of different characteristic 36 as shown in Figs. 8B, 8D has a large number of the air gaps 38A, 38B. The air gaps 38A, 38B are dispersedly formed throughout the part of different characteristic 36. One air gap 38A (cf. Fig. 8B) is a macroscopic air gap of the size of a degree to which one can see by naked eyes, and the part of different characteristic 36 has a large number of the air gaps 38A at a macroscopic tissue level. The part of different characteristic 36 is formed by using materials having the macroscopic air gaps 38A. For example, the part of different characteristic 36 is formed by the powder laminate molding using the laminate molding device (three-dimensional printer etc.). Or the part of different characteristic 36 is formed by processing a foam metal.

The other air gap 38B (cf. Fig. 8D) is a microscopic air gap of the size of a degree to which one cannot see by naked eyes but can see with a microscope, and the part of different characteristic 36 has a large number of the air gaps 38B at a microscopic tissue level. The part of different characteristic 36 is formed by using materials having microscopic air gaps 38B. For example, the part of different characteristic 36 is formed by the powder sintering. By forming a large number of air gaps 38A, 38B in the part of different characteristic 36, density of the part of different characteristic 36 is reduced in comparison with a case without the air gaps 38A, 38B, so that an apparent thermos-physical property value of the part of different characteristic 36 is varied. Moreover, in proportion to reduction of the density, the thermos-physical property values (e.g., thermal conductivity, specific heat) of the part of different characteristic 36 are reduced. As a result, the thermal conductive properties of the part of different characteristic 36 are varied.

The thermal conductive properties of the part of different characteristic 36 can be regulated by changing states of the air gaps 38A, 38B. Moreover, the thermal conductive property of the part of different characteristic 36 can be different from the thermal conductive property of the main part 37 even where the part of different characteristic 36 and the main part 37 of the mold 3 are made of the same materials. In this way, the thermal conductive property of the part of different characteristic 36 can be more deteriorated than the thermal conductive property of the main part 37. Moreover, only macroscopic air gaps 38A may be formed in the part of different characteristic 36 or only microscopic air gaps 38B may be formed in the part of different characteristic 36. Moreover, both the air gaps 38A, 38B may be formed in the part of different characteristic 36.

As mentioned above, though an example in which the tread part 2A and the shoulder part 2B of the tire 2 are molded by the mold 3 has been described, other parts of the tire 2 may be also molded by the mold 3. Moreover, though the tire vulcanizing apparatuses 1A - 1E have been described by taking for an example where the rubber article is the tire 2, but the rubber article is not limited to the tire 2 and may be other rubber article. The rubber article is an article made of rubber molded by the mold 3, and is, for example, an article consisting of only rubber or an article consisting of rubber and other material.

### (Heating tests of the tire 2)

The various tests were performed by using the tire vulcanizing apparatus of each of the embodiments described above, to confirm regulation of temperature of the tire 2. In Figs. 3 - 7, width Wt of the tire 2 is the width in the tire width direction M of a part thereof molded by the mold 3, and thickness T of the mold 3 is the thickness at the center position of the tread part 2A. In Figs. 3 - 6, width Ws of the heat shielding material 50 (the inhibition part 5) is the width in the tire width direction M, and thickness P of the heat shielding material 50 is the thickness at the center position of the tread part 2A. In Fig. 7, the width Wr of the part of different characteristic 36 is the width in the tire width direction M.

In each of the tests, the holding body 4 is made of carbon steel (Japanese Industrial Standards: SS400), and the width Wt of the tire 2 is 300 mm. Moreover, the heat shielding material 50 of the inhibition part 5 is made of rubber, and initial temperature of the tire 2 is 25 °C. The initial temperature is the temperature at the time of starting of heating of the tire 2. In each of the tests, the temperatures in the tire 2 were measured when the tire 2 was heated and vulcanized by the tire vulcanizing apparatus.

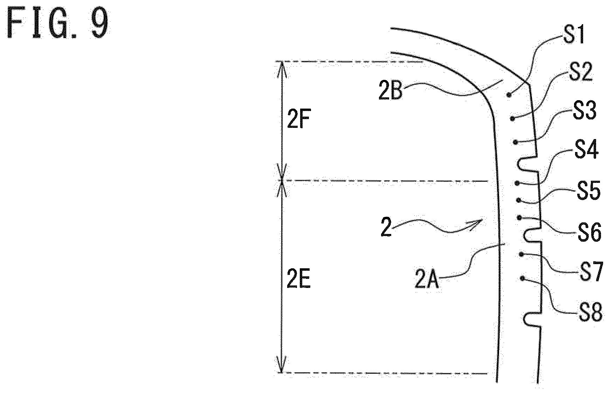

Fig. 9 is a sectional view illustrating temperature measurement points of the tire 2.

As illustrated, in the tests, temperatures are measured at eight points (temperature measurement points S1 - S8) in the tread part 2A of the tire 2. The temperature measurement points S1 - S8 are located in the center in the thickness direction of the tread part 2A and are sequentially set towards the central position from the outside end of the tread part 2A. The temperature measurement points S1 - S3 are located in the outside area 2F of the tire 2, and the temperature measurement points S4 - S8 are located in the central area 2E of the tread part 2A. Moreover, the temperature measurement point S8 is set at the center position of the tread part 2A.

In each of the tests, temperatures at the temperature measurement points S1 - S8 are measured between starting of heating of the tire 2 to 800 seconds later and temperature difference in the tire 2 at the time of each of the measurements is calculated. Temperature difference in the tire 2 is difference between the maximum value and the minimum value of the temperatures at the temperature measurement points S1 - S8. The maximum temperature difference in the tire 2 is obtained based on the temperature differences in the tire 2 which are calculated. The maximum temperature difference in the tire 2 is the maximum value of temperature differences in the tire 2 between starting of heating of the tire 2 to 800 seconds later. The results of the tests will be sequentially described as follows.

### (The first to fourth tests)

At first, the results of the first to fourth tests using the tire vulcanizing apparatuses 1A, 1C, 1D (Figs. 3, 5, 6) will be described. The tire vulcanizing apparatuses 1A, 1C, 1D include the inhibition part 5 consisting of the heat shielding material 50. In the first to fourth tests, heat shielding rate G (%) provided by the heat shielding material 50 is changed. The heat shielding rate G is a ratio of the width Ws of the heat shielding material 50 to the width Wt of the tire 2 (G = (Ws/Wt)×100). Moreover, the mold 3 is made of three kinds of materials and the heat shielding material 50 is made of two kinds of materials.

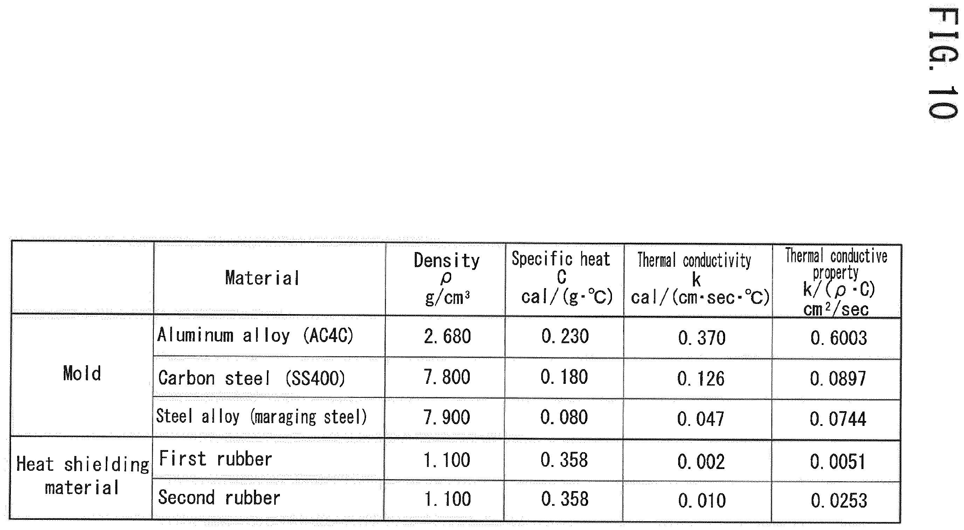

Fig. 10 is a table showing materials which are used in the first to fourth tests and qualities thereof and shows specifications of the mold 3 and the heat shielding material 50. Moreover, Fig. 10 shows density (p), specific heat (C), thermal conductivity (k) and thermal conductive property of each of the materials. Here, the thermal conductive property is temperature conductivity (temperature rise coefficient) (k/ (ρ· C)).

As illustrated, the materials of the mold 3 are aluminum alloy (Japanese Industrial Standards: AC4C), carbon steel (Japanese Industrial Standards: SS400), steel alloy (maraging steel). The thermal conductivity and the thermal conductive property become lower in order of aluminum alloy, carbon steel, steel alloy. The materials of the heat shielding material 50 are two kinds of rubbers (the first rubber, the second rubber) . The thermal conductivity and the thermal conductive property become lower in order of the second rubber, the first rubber.

### (The first test)

The first test is a heating test of the tire 2 by the tire vulcanizing apparatus 1A (cf. Fig. 3) of the first embodiment. The materials of the mold 3 are aluminum alloy, carbon steel and steel alloy, and the thickness T of the mold 3 is 10 mm. The material of the heat shielding material 50 is the first rubber, and the thickness P of the heat shielding material 50 is 5 mm. The initial temperature of the mold 3, the holding body 4 and the bladder 11 is 160 °C, and heating temperature of the holding body 4 by the heating means 25 is 170 °C. The heat shielding rates G provided by heat shielding material 50 are 0% (in a state without the heat shielding material 50 and the inhibition part 5) and 60%, respectively.

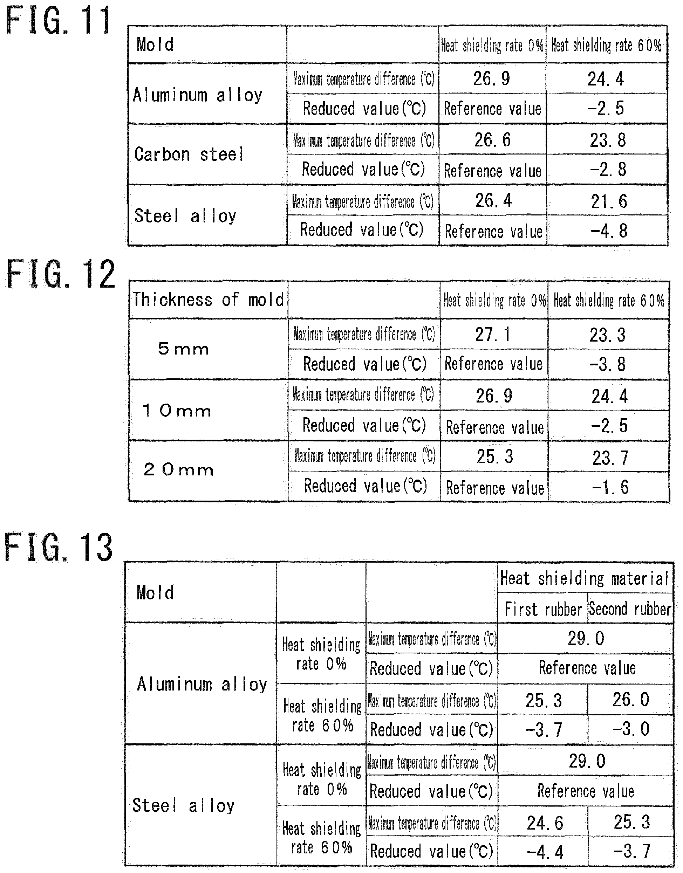

Fig. 11 is a table showing the result of the first test and shows the maximum temperature difference (°C) and a reduced value (°C) of the temperature difference in the tire 2 in each test condition. The maximum temperature difference at the time of the heat shielding rate 0% is the reference value for the reduced value of the temperature difference.

As illustrated, the temperature is regulated depending on a part of the tire 2 by providing the heat shielding material 50 of the inhibition part 5, so that the maximum temperature difference in the tire 2 can be reduced. Moreover, as the thermal conductive property of the mold 3 becomes lower, the reduced value of the maximum temperature difference becomes larger, so that an effect to reduce the maximum temperature difference becomes larger.

### (The second test)

The second test is the heating test of the tire 2 by the tire vulcanizing apparatus 1A (cf. Fig. 3) of the first embodiment or the tire vulcanizing apparatus 1C (cf. Fig. 5) of the third embodiment. The material of the mold 3 is aluminum alloy, and the thickness T of the mold 3 is 5 mm, 10 mm, 20 mm. The material of the heat shielding material 50 is the first rubber, and the thickness P of the heat shielding material 50 is 5 mm. The initial temperature of the mold 3, the holding body 4 and the bladder 11 is 160 °C, and the heating temperature of the holding body 4 by the heating means 25 is 170 °C. The heat shielding rates G provided by the heat shielding material 50 are 0% and 60%, respectively.

Fig. 12 is a table showing the result of the second test and shows the maximum temperature difference (°C) and the reduced value (°C) of the temperature difference in the tire 2 in each test condition.

As illustrated, the temperature is regulated depending on a part of the tire 2 by providing the heat shielding material 50 of the inhibition part 5, so that the maximum temperature difference in the tire 2 can be reduced. Moreover, as the thickness T of the mold 3 becomes thinner, the reduced value of the maximum temperature difference becomes larger, so that an effect to reduce the maximum temperature difference becomes larger.

### (The third test)

The third test is a heating test of the tire 2 by the tire vulcanizing apparatus 1A (cf. Fig. 3) of the first embodiment or the tire vulcanizing apparatus 1C (cf. Fig. 5) of the third embodiment. The materials of the mold 3 are aluminum alloy and carbon steel, and the thickness T of the mold 3 is 5 mm. The materials of the heat shielding material 50 are the first rubber and the second rubber, and the thickness P of the heat shielding material 50 is 5 mm. The initial temperature of the mold 3, the holding body 4 and the bladder 11 is 170 °C, and the heating temperature of the holding body 4 by the heating means 25 is 180 °C. The heat shielding rates G provided by the heat shielding material 50 are 0% and 60%, respectively.

Fig. 13 is a table showing the result of the third test and shows the maximum temperature difference (°C) and the reduced value (°C) of the temperature difference in the tire 2 in each test condition.

As illustrated, the temperature is regulated depending on a part of the tire 2 by providing the heat shielding material 50 of the inhibition part 5, so that the maximum temperature difference in the tire 2 can be reduced.

### (The fourth test)

The fourth test is a heating test of the tire 2 by the tire vulcanizing apparatus 1C (cf. Fig. 5) of the third embodiment or the tire vulcanizing apparatus 1D (cf. Fig. 6) of the fourth embodiment. The material of the mold 3 is steel alloy, and the thickness T of the mold 3 is 3 mm. The material of the heat shielding material 50 is the first rubber, and the thickness P of the heat shielding material 50 is 5 mm. In the tire vulcanizing apparatus 1C of the third embodiment, the convex part 31 of the molding part 30 does not have the cavity 35, and in the tire vulcanizing apparatus 1D of the fourth embodiment, there is the cavity 35 in the convex part 31 of the molding part 30. The initial temperature of the mold 3, the holding body 4 and the bladder 11 is 160 °C, and the heating temperature of the holding body 4 by the heating means 25 is 170 °C. The heat shielding rates G provided by the heat shielding material 50 are 0% and 60%, respectively.

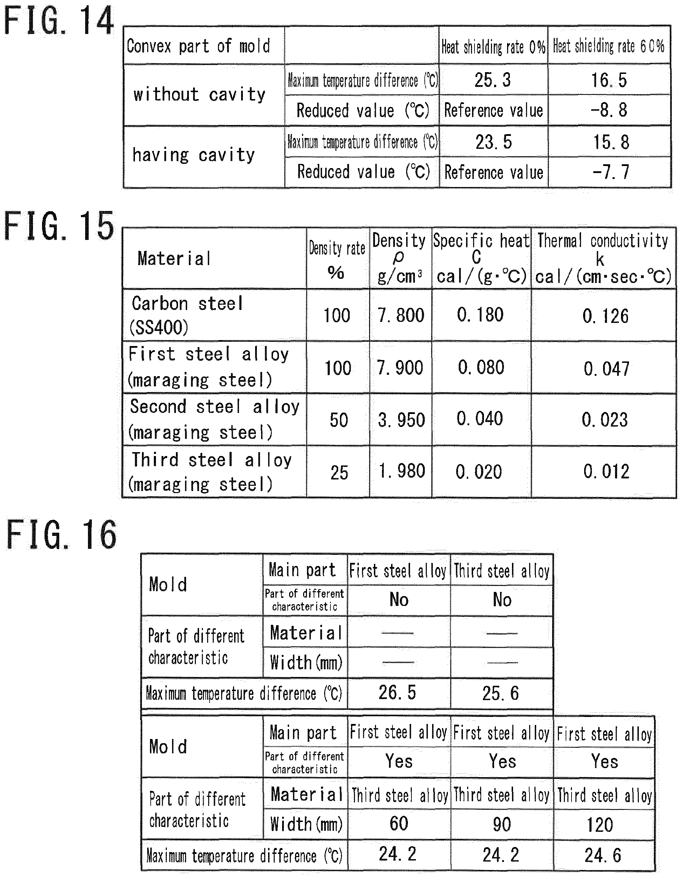

Fig. 14 is a table showing the result of the fourth test and shows the maximum temperature difference (°C) and the reduced value (°C) of the temperature difference in the tire 2 in each test condition.

As illustrated, the temperature is regulated depending on a part of the tire 2 by providing the heat shielding material 50 of the inhibition part 5, so that the maximum temperature difference in the tire 2 can be reduced. Moreover, by forming the cavity 35 in the convex part 31 of the molding part 30, the maximum temperature difference in the tire 2 becomes smaller, so that an effect to reduce the maximum temperature difference in the tire 2 becomes larger.

### (The fifth to seventh tests)

Next, the results of the fifth to seventh tests using the tire vulcanizing apparatuses 1E (cf. Figs. 7, 8) of the fifth embodiment will be described. The mold 3 of the tire vulcanizing apparatuses 1E includes the part of different characteristic 36. In the fifth to seventh tests, the width Wr of the part of different characteristic 36 and density rates of the materials of the mold 3 are changed. The width Wr of the part of different characteristic 36 is 60mm, 90mm, 120mm. Moreover, the thickness T of the mold 3 is 5 mm. The initial temperature of the mold 3, the holding body 4 and the bladder 11 is 160 °C, and the heating temperature of the holding body 4 by the heating means 25 is 170 °C. The mold 3 is made of four kinds of materials.

Fig. 15 is a table showing materials which are used in the fifth to seventh tests and qualities thereof and shows the specification of the mold 3. Moreover, Fig. 15 shows density rate, density (p), specific heat (C) and thermal conductivity (k) of each of the materials.

As illustrated, the materials of the mold 3 are carbon steel (Japanese Industrial Standards: SS400), the first to third steel alloy (maraging steel) . The density rate is a ratio of density when the density of the materials without processing of forming of the air gaps 38A, 38B is assumed 100%. The density rate of the carbon steel is 100%, and the density rate of the first steel alloy is 100%.

Whereas the density rate of the first steel alloy is 100%, the density rate of the second steel alloy is 50%, and the density rate of the third steel alloy is 25%. The second steel alloy and the third steel alloy are formed by the powder laminate molding using the laser sintering. Moreover, by regulating the density of powder by the sintering, the microscopic air gaps 38B are formed. In this way, the second steel alloy and the third steel alloy are formed to have their density rates, respectively. The specific heat and the thermal conductivity are lowered in order of carbon steel, the first steel alloy, the second steel alloy, the third steel alloy.

### (The fifth test)

Fig. 16 is a table showing the result of the fifth test and shows the maximum temperature difference (°C) in the tire 2 in each test condition.

As illustrated, in the fifth test, the materials of the main part 37 of the mold 3 are the first steel alloy and the third steel alloy, and the material of the part of different characteristic 36 is the third steel alloy. The temperature is regulated depending on a part of the tire 2 by providing the part of different characteristic 36 in the mold 3, so that the maximum temperature difference in the tire 2 can be reduced.

### (The sixth test)

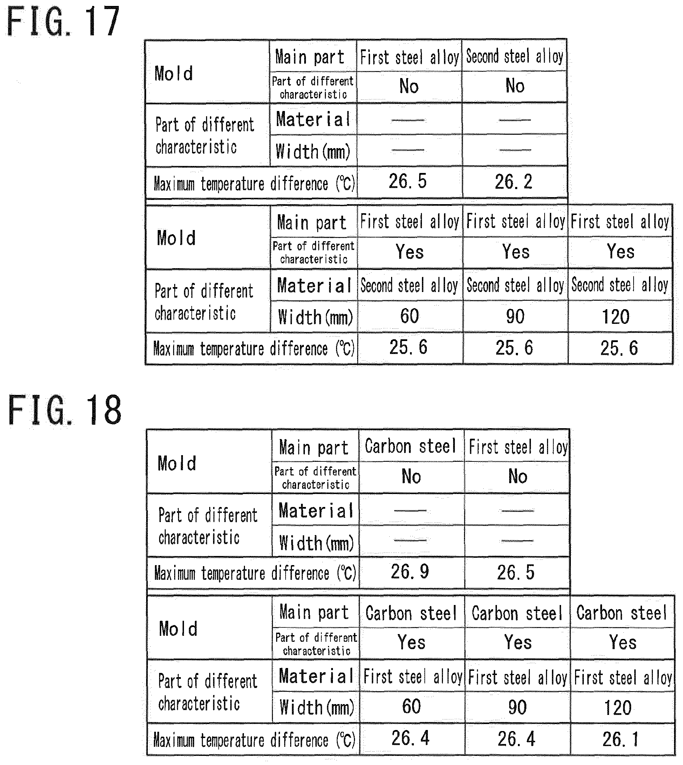

Fig. 17 is a table showing the result of the sixth test and shows the maximum temperature difference (°C) in the tire 2 in each test condition.

As illustrated, in the sixth test, the materials of the main part 37 of the mold 3 are the first steel alloy and the second steel alloy, and the material of the part of different characteristic 36 is the second steel alloy. The temperature is regulated depending on a part of the tire 2 by providing the part of different characteristic 36 in the mold 3, so that the maximum temperature difference in the tire 2 can be reduced.

### (The seventh test)

Fig. 18 is a table showing the result of the seventh test and shows the maximum temperature difference (°C) in the tire 2 in each test condition.

As illustrated, in the seventh test, the materials of the main part 37 of the mold 3 are the carbon steel and the first steel alloy, and the material of the part of different characteristic 36 is the first steel alloy. The temperature is regulated depending on a part of the tire 2 by providing the part of different characteristic 36 in the mold 3, so that the maximum temperature difference in the tire 2 can be reduced. Moreover, as illustrated in Figs. 16 to 18, the specific heat and the thermal conductivity of the part of different characteristic 36 are lowered, the reduced value of the maximum temperature difference in the tire 2 becomes smaller, so that an effect to reduce the maximum temperature difference becomes larger.

### Description of the Reference Symbols

- 1A∼1E...: tire vulcanizing apparatus
- 2...: tire
- 2A...: tread part
- 2B...: shoulder part
- 2C...: side part
- 2D...: bead part
- 2E...: central area
- 2F...: outside area
- 3...: mold
- 4...: holding body
- 5...: inhibition part
- 10...: mold
- 11...: bladder
- 12...: upper side mold
- 12A...: molding part
- 13...: lower side mold
- 13A...: molding part
- 14...: upper bead mold
- 14A...: molding part
- 15...: lower bead mold
- 15A...: molding part
- 16...: split mold
- 17...: clamp member
- 18...: internal space
- 20...: opening and closing mechanism
- 21...: upper plate
- 22...: lower plate
- 23...: outer ring
- 23A...: guide part
- 24...: movable member
- 25...: heating means
- 30...: molding part
- 31...: convex part
- 32...: attaching part
- 33...: central area
- 34...: outside area
- 35...: cavity
- 36...: part of different characteristic
- 37...: main part
- 38A...: air gap
- 38B...: air gap
- 40...: connecting part
- 41...: holding part
- 50...: heat shielding material
- 51...: housing part
- 52...: hollow part

## Claims

1. A vulcanizing apparatus for rubber article comprising a mold to mold an unvulcanized rubber article, a holding body to hold the mold and a heating means to heat the holding body, the rubber article being vulcanized by heat transferred from the holding body to the mold, the vulcanizing apparatus for rubber article comprising an inhibition part which is formed in a part between the mold and the holding body so as to inhibit transfer of the heat from the holding body to the mold.

2. The vulcanizing apparatus for rubber article as set forth in claim 1, wherein
the inhibition part is made of a heat shielding material of lower thermal conductivity than that of the mold located between the mold and the holding body.

3. The vulcanizing apparatus for rubber article as set forth in claim 1, wherein
the inhibition part is a hollow part which is formed between the mold and the holding body.

4. The vulcanizing apparatus for rubber article as set forth in any one of claims 1 to 3, wherein the mold has a molding part to mold the rubber article while being in contact with the rubber article, and a cavity formed between the inhibition part and the molding part.

5. The vulcanizing apparatus for rubber article as set forth in claim 4, wherein
the molding part has a convex part to form a concave part in the rubber article, and the cavity is formed in the convex part of the molding part.

6. A vulcanizing apparatus for rubber article comprising a mold to mold an unvulcanized rubber article, a holding body to hold the mold and a heating means to heat the holding body, the rubber article being vulcanized by heat transferred from the holding body to the mold, wherein
the mold has a molding part to mold the rubber article while being in contact with the rubber article and a part of different characteristic which is formed in a part of the molding part and has a thermal conductive property that is different from thermal conductive properties of other parts of the mold.
